# FASCICULE DE BREVET EUROPEEN

(11) **EP 3 031 884 B1**
(45) Date de publication et mention de la délivrance du brevet: **25.11.2020**
(21) Numéro de dépôt: 15198285.7
(22) Date de dépôt: 07.12.2015
(51) Int. Cl.: C10K 3/02, C10K 3/04, C10K 1/00, C10J 3/00

(54) **PROCÉDÉ DE GAZÉIFICATION DE CHARGE DE MATIÈRE CARBONÉE À RENDEMENT MATIÈRE ET COÛT DE PRODUCTION OPTIMISÉS**
VERGASUNGSVERFAHREN EINER LADUNG VON KOHLENSTOFFHALTIGEM MATERIAL MIT OPTIMIERTER MATERIALEFFIZIENZ UND OPTIMIERTEN PRODUKTIONSKOSTEN
METHOD FOR GASIFYING A LOAD OF CARBONACEOUS MATERIAL WITH OPTIMISED MATERIAL YIELD AND PRODUCTION COST

(30) Priorité: 08.12.2014 FR 1462052
(43) Date de publication de la demande: 15.06.2016
(73) Titulaire: COMMISSARIAT À L'ÉNERGIE ATOMIQUE ET AUX ÉNERGIES ALTERNATIVES, 75015 Paris (FR); Electricité de France, 75008 Paris (FR)
(72) Inventeur: SETIER, Pierre-Alexandre, 38300 Bourgoin- Jallieu (FR); BEDEL, Laurent, 38950 QUAIX-EN-CHARTREUSE (FR); GROS, Sébastien, 75002 PARIS (FR)
(74) Mandataire: Nony

(56) Documents cités:
- EP-A1- 2 206 762
- WO-A1-2008/115933
- WO-A1-2011/004088
- WO-A2-2011/004122

## Description

### Domaine technique

La présente invention concerne un procédé de gazéification de la biomasse et, plus généralement de charge de matière carbonée, dans un réacteur de gazéification en vue de produire des combustibles ou des carburants liquides des combustibles, des carburants liquides ou d'autres produits d'intérêt, tels que du méthane de synthèse (SNG), un carburant liquide (Diesel Fischer-Tropsch) ou un autre produit organique (méthanol, diméthyle éther (DME..)).

L'invention vise à améliorer la rentabilité du procédé global, qui va de la gazéification à la synthèse, en utilisant de l'électricité lorsque celle-ci est peu onéreuse pour augmenter le taux de production de l'usine.

La gazéification peut aussi bien être réalisée dans un réacteur de type à lit fluidisé, que dans un réacteur de type à flux entraîné ou de type à lit fixe.

### Etat de la technique

On désigne sous l'appellation charge carbonée, tout matériau combustible constitué de composés contenant du carbone.

Il peut donc s'agir de biomasse, c'est-à-dire tout matériau inhomogène d'origine végétale contenant du carbone, tel que de la biomasse ligno-cellulosique, des résidus forestiers ou agricoles (paille), ou des déchets ménagers. Toutes ces charges peuvent être quasi-sèches ou humides.

Il peut aussi s'agir d'un combustible d'origine fossile, tel que le charbon.

Il peut aussi s'agir de déchets combustibles d'origine industrielle contenant du carbone, tel que des matières plastiques.

Il peut aussi s'agir d'une combinaison entre ces différentes charges.

Les procédés actuels en cours d'étude ou à l'échelle de pilote industriel, permettant de convertir par voie thermochimique la biomasse ou les autres charges en carburant liquide ou gazeux par une synthèse chimique, comprennent nécessairement une étape de gazéification de la charge carbonée pour obtenir un gaz de synthèse contenant majoritairement du monoxyde de carbone (CO) et de l'hydrogène (H2).

L'étape de gazéification proprement dite est réalisée en continu à partir de la charge carbonée de nature et de granulométrie différentes stockée habituellement à la pression atmosphérique.

La gazéification de la biomasse et du charbon est connue depuis longtemps. De manière générale, on peut la définir comme une transformation thermochimique de la biomasse ou du charbon par l'action de la chaleur en présence d'agents gazéifiants. On cherche à générer, à l'issue de la gazéification, un mélange de gaz dit gaz de synthèse ou « syngaz », qui comprend du monoxyde de carbone et de l'hydrogène (CO+H₂) entre autres.

Ainsi, les procédés de gazéification de la biomasse ligno-cellulosique permettent de générer un gaz de synthèse qui permet de produire en aval soit des carburants liquides soit d'autres produits organiques. Cette gazéification se déroule en présence typiquement de vapeur d'eau vers 800-900°C pour des réacteurs à lit fluidisé. Classiquement, ces procédés convertissent le carbone de la biomasse avec un gaz en sortie du gazéifieur avec une composition moyenne en gaz secs de 20-25 % en CO, 8-12 % en CH₄, 18-22 % en CO₂ et environ 38-42 % en H₂ et, des composés organiques C₂ à C₁₆ plus des composés inorganiques. Ce procédé consomme environ 25 à 35 % de l'eau introduite par la réaction de gazéification.

La gazéification est réalisée dans un réacteur chimique, usuellement appelé réacteur de gazéification, soit de type à lit fluidisé, soit de type lit fixe, soit de type à flux entraîné fonctionnant généralement sous pression.

Les réacteurs de type à lit fluidisé et à lit fixe sont d'une efficacité plus faible en raison de la température de réaction comprise généralement entre 800 °C et 1000 °C, qui conduit à une conversion moindre de la biomasse en gaz de synthèse CO et H₂ avec la génération entre autre de méthane (CH₄). Ils ont l'avantage par contre de ne nécessiter qu'un séchage et un broyage de granulométrie moyenne de la biomasse sans autre préparation spécifique. Le séchage et broyage n'induisent qu'une faible perte de rendement du procédé global. Les réacteurs à lit fluidisé peuvent être adaptés pour produire des gaz naturels de synthèse (SNG).

Les réacteurs à flux entraîné ont quant à eux un excellent rendement de conversion de la biomasse en gaz de synthèse CO et H₂, et sont donc tout à fait appropriés à la production de carburants ou produits chimiques de synthèse à partir de la biomasse. Ils servent donc à ce jour de référence dans le domaine des carburants désignés sous l'appellation en anglais Biomass to Liquid (en abrégé BtL).

L'apport de chaleur des procédés actuellement connus est fait en général par la combustion d'une partie de la biomasse elle-même (biomasse brute, gaz, résidus solides, goudrons...). Ces procédés sont dits autothermiques. Dans les procédés autothermiques, une partie du carbone provenant de la biomasse n'est pas donc pas convertie en carburant liquide.

L'apport de chaleur du procédé peut être fait par une source thermique externe, de préférence d'origine électrique nucléaire sans émission de CO.

Ces procédés sont dits allothermiques avec comme avantage un rendement massique supérieur à celui des procédés autothermiques.

Un inconvénient majeur de ces procédés est que le taux de conversion du carbone de la biomasse en CO actuellement atteint n'est pas suffisamment élevé puisque de l'ordre de seulement 35-40 %.

En outre, les rendements matière en combustible ou en carburant ou autre produit d'intérêt sont assez faibles, de l'ordre de 20 à 25%.

Enfin, la production des combustibles ou des carburants ou autres produits d'intérêt demande un ratio entre hydrogène (H₂) et monoxyde de carburant (CO) précis qui n'est pas celui obtenu en sortie de la gazéification. Ce ratio précis peut d'ailleurs varier en fonction du combustible ou carburant que l'on souhaite obtenir au final, tel que du méthane de synthèse (SNG) ou un carburant liquide (Diesel Fischer Topsch) ou un autre produit organique (méthanol, diméthyle éther..).

Afin d'augmenter le rendement en CO, il est déjà connu d'enrichir un mélange de gaz H₂/CO/CO₂, de type d'un syngaz, en CO grâce à la mise en œuvre d'une réaction dite de gaz à l'eau inverse (d'acronyme RWGS en anglais pour «Reverse Water Gas Shift »). On peut citer ici les nombreuses demandes de brevet ou brevets qui décrivent cette réaction RWGS parmi lesquelles EP 0291857, US 4265868, WO 95/24367, WO 2003/087271, WO 2005/026093, WO 2009/000494, WO 2013/064552, WO 2013/076293, WO 2013/190500. Il est à noter de manière importante que dans l'ensemble de ces demandes de brevet ou brevets, les flux et compositions des gaz sont constants.

Par ailleurs, la demanderesse a déjà proposé dans la demande de brevet EP 2706103 d'améliorer le rendement en CO par un recyclage du CO₂ issu de la gazéification, dans le réacteur de gazéification.

De nombreux auteurs se sont en outre intéressés à faire l'inventaire des différents procédés de gazéification de biomasse pour la production de carburants liquides et à faire leur évaluation économique. On pourra se reporter aux publications [1] à [4].

Quel que soit le procédé de gazéification connu, aucun n'envisage à ce jour une flexibilité dans la production afin d'augmenter le rendement matière et de réduire le coût de production, et ce, tout en permettant d'obtenir un ratio entre hydrogène (H2) et monoxyde de carbone (CO) produits qui soit précis.

Il existe donc un besoin d'améliorer les procédés de gazéification de charge de matière carbonée, notamment en vue d'en augmenter le rendement matière et d'en diminuer le coût de production, et ce avec l'obtention d'un ratio entre hydrogène (H₂) et monoxyde de carbone (CO) produits qui soit précis.

Les documents WO 2011/004088 A1, WO 2011/004122 A2, EP 2 206 762 A1 décrivent l'intégration de gazéificateurs et de réacteurs de synthèse à l'aide de l'électrolyse supplémentaire et des réacteurs RWGS et WGS.

Le but de l'invention est de répondre au moins partiellement à ce besoin.

### Exposé de l'invention

L'invention concerne une installation de thermochimique de charge de matière carbonée selon la revendication 1.

Pour ce faire, l'invention a pour objet un procédé de conversion thermochimique d'une charge de matière carbonée en un gaz de synthèse en vue de produire un combustible ou un carburant ou un autre produit d'intérêt, notamment un carburant liquide, ou un autre produit de synthèse, mis en œuvre dans une installation selon la revendication 1, selon lequel on réalise une étape de gazéification de la charge de matière carbonée dans un réacteur, puis une étape d'épuration du gaz de synthèse produit par la gazéification, une étape de décarbonatation du gaz épuré et on réalise une étape de synthèse du gaz,
le procédé comprenant en outre une étape intermédiaire à choisir parmi l'une des trois étapes intermédiaires a) à c) suivantes:
a/ en amont de l'étape de décarbonatation on fait subir au gaz de synthèse une étape de réaction du gaz à l'eau (WGS),
   soit
b/ en aval de l'étape d'épuration du gaz, on ajoute au gaz de synthèse, de l'hydrogène produit par électrolyse de l'eau,
   soit
c/ on fait subir à un mélange de gaz de synthèse et d'hydrogène produit par électrolyse de l'eau, une étape de réaction du gaz à l'eau inverse (RWGS),

le choix de l'une ou l'autre des étapes a/ à c/ étant réalisé en fonction du coût de l'électricité nécessaire à la production d'hydrogène par électrolyse de l'eau.

Ces trois étapes intermédiaires et alternatives sont réalisées en aval de l'étape d'épuration du gaz et en amont de l'étape de décarbonatation.

Ainsi, les réacteurs WGS et RWGS sont disposés en parallèle fluidique et sont alternativement alimentés par un même flux gazeux contenant à la fois du monoxyde de carbone et du dioxyde de carbone, ce qui permet de simplifier la mise en œuvre du procédé.

Par « épuration du gaz de synthèse », on entend ici et dans le cadre de l'invention, la définition technologique usuelle, à savoir l'élimination des polluants tels que H₂S, KCl, ..... et des goudrons présents dans le gaz de synthèse brut issu de la gazéification.

Par « décarbonatation », on entend ici et dans le cadre de l'invention, la définition technologique usuelle, à savoir l'élimination du dioxyde de carbone (CO₂) présent dans le gaz de synthèse.

En particulier, contrairement à une unité de conditionnement qui sépare le dioxyde de carbone et le monoxyde de carbone en vue de récupérer ce dioxyde de carbone pour le convertir dans un réacteur RWGS, l'étape de décarbonatation selon l'invention n'a pas pour finalité de produire du dioxyde de carbone mais d'éliminer ce dioxyde de carbone du flux gazeux après l'application de l'une des étapes intermédiaires a), b) ou c).

Ainsi, l'invention propose un procédé de conversion d'une charge de matière carbonée à partir d'une gazéification, qui intègre une étape intermédiaire à choisir parmi les trois étapes a/ à c/ et qui permet ainsi d'optimiser la production de produit d'intérêt pour amortir plus rapidement l'investissement d'une installation/usine de gazéification, et ce en fonction du coût de l'électricité disponible et qui est nécessaire à une électrolyse de l'eau.

Autrement dit, par sa flexibilité dans le choix de l'étape intermédiaire entre gazéification et synthèse, l'invention permet de maximiser en continu à la fois le rendement du carbone de la biomasse en CO, le ratio entre H₂ et CO et les rendements matière et économique en fonction de la disponibilité d'électricité à bas prix.

L'électrolyse de l'eau produit de l'hydrogène qui ensuite est injecté soit en entrée du réacteur de synthèse (étape b/) soit en entrée d'un réacteur de RWGS situé en amont du réacteur de synthèse (étape c/). L'hydrogène peut être obtenu par une électrolyse alcaline, à échange de protons (PEM acronyme anglais pour « Proton Exchange Membrane ») ou encore à hautes températures (EHT pour Electrolyse Haute Température).

Plus précisément, le choix de l'étape intermédiaire à mettre en œuvre parmi les étapes technologiques a/ à c/ en fonction du coût de l'électricité s'effectue comme suit.

Etape a/ : Pour des prix de l'électricité élevés, on met en œuvre la réaction WGS pour atteindre le ratio H₂/CO souhaité. Cette étape a/ donne typiquement un rendement matière de 20 à 25% en produit d'intérêt final. De préférence, on ne met pas en œuvre ici un recyclage du CO₂ vers le réacteur de gazéification.

Etape b/ : Pour des prix de l'électricité modérés, on ajoute de l'hydrogène produit par électrolyse directement pour ajuster le ratio H₂/CO. Cette étape b/ donne un rendement matière plus favorable, typiquement compris entre 30 et 35%. Simultanément, on réalise le recyclage d'au moins une partie, de préférence la totalité du CO₂ obtenu par décarbonatation, en le réinjectant en amont dans le réacteur de gazéification.

Par exemple dans une étude de cas spécifique les inventeurs ont pu déterminer que, pour du gaz naturel synthétique (SNG) et des carburants Fischer-Tropsch, le choix du passage de l'étape a/ à l'étape b/ devient avantageux (réduction du coût de production total du biocarburant), dès que le prix de l'électricité devient inférieur à environ 30€/MWh.

Etape c/ : Pour un prix de l'électricité entrainant d'une part une augmentation du rendement matière, typiquement compris entre 40 et 45% et d'autre part une baisse du prix de production, on injecte de l'hydrogène H₂ produit par électrolyse dans un réacteur RWGS.

Par exemple, les inventeurs ont pu déterminer également que, pour du gaz naturel synthétique (SNG), le choix du passage de l'étape b/ à l'étape c/ peut être fait dès que le coût de production total de l'électricité devient inférieur à environ 10€/MWh.

Selon un mode de réalisation avantageux, lorsqu'on réalise l'étape b/, le dioxyde de carbone (CO₂) récupéré de la décarbonatation est au moins en partie injecté dans le réacteur de gazéification en tant qu'agent gazéifiant. De préférence la totalité du dioxyde de carbone (CO₂) récupéré de la décarbonatation est injectée dans le réacteur de gazéification.

Selon une variante de réalisation avantageuse, l'étape de synthèse consiste en une synthèse selon le procédé Fischer-Tropsch pour produire un carburant liquide.

Selon une variante avantageuse, on réalise une étape de reformage des gaz de tête issus de la synthèse Fischer-Tropsch.

De préférence, on réinjecte l'hydrogène produit par reformage, dans le gaz de synthèse en amont de la synthèse Fischer-Tropsch.

Selon une variante alternative de réalisation, l'étape de synthèse consiste en une synthèse pour produire du gaz naturel synthétique (SNG).

La réaction de gazéification peut être réalisée à des températures comprises entre 700 et 1600°C.

Selon une variante de réalisation, le réacteur de gazéification est un réacteur de type à lit fluidisé, la réaction de gazéification étant réalisée à des températures comprises entre 800 et 950°C.

Selon une variante alternative, le réacteur de gazéification est un réacteur de type à flux entraîné, la réaction de gazéification étant réalisée à des températures comprises entre 1400 et 1600°C.

La charge de matière carbonée peut être de la biomasse, de préférence ligno-cellulosique.

L'invention concerne également une installation de conversion thermochimique de charge de matière carbonée.

Selon l'invention, l'installation comprend:
- un réacteur de gazéification,
- une unité d'épuration de gaz de synthèse brut,
- un réacteur de synthèse,
- une unité de décarbonatation du gaz de synthèse, en aval de l'unité d'épuration, ou en aval du réacteur de synthèse,
et, en aval de l'étape d'épuration et en amont du réacteur de synthèse:
- un premier réacteur, dit réacteur WGS, adapté pour mettre en œuvre la réaction de gaz à l'eau,
- un deuxième réacteur, dit réacteur RWGS, en parallèle du réacteur WGS, et adapté pour mettre en œuvre la réaction inverse de gaz à l'eau,

l'installation comprenant en outre une unité d'électrolyse de l'eau adaptée pour mettre en œuvre la production d'hydrogène, l'unité d'électrolyse étant reliée directement respectivement en amont du réacteur de synthèse et au réacteur RWGS pour alimenter alternativement l'un ou l'autre en hydrogène produit par l'électrolyse.

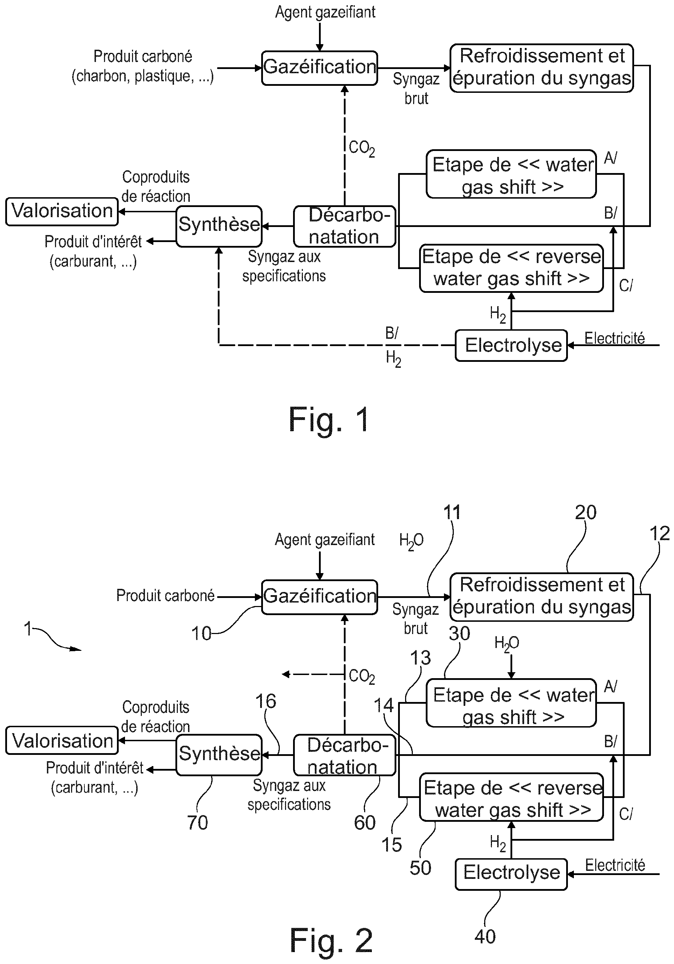

Une telle installation de conversion selon l'invention est représentée en figure 1, sur laquelle on peut voir qu'entre l'unité de refroidissement et d'épuration du gaz de synthèse brut issu de la gazéification et le réacteur de synthèse, on a agencé en parallèle un réacteur de mise en œuvre d'une réaction WGS et un réacteur de mise en œuvre d'une réaction RWGS. En outre, un électrolyseur est relié respectivement directement en amont du réacteur de synthèse et du réacteur RWGS pour alimenter l'un ou l'autre en hydrogène.

L'invention qui vient d'être décrite est particulièrement avantageuse pour de nombreuses applications, parmi lesquelles on peut citer la production de biocarburants (BtL). En effet, les filières de production en biocarburants ou biocombustibles sont actuellement envisagées pour réaliser du service de stabilisation du réseau et pour favoriser l'intégration des énergies renouvelables intermittentes.

Aussi, une installation de conversion selon l'invention répond parfaitement à ces attentes par sa flexibilité de fonctionnement, avec une consommation d'électricité par l'électrolyseur au moment des périodes de surplus de production d'électricité d'origine renouvelable, à bas prix.

Par exemple, avec une installation de conversion selon l'invention, le coût des biocarburants ou du méthane ou méthanol ou DME produit peut diminuer mécaniquement avec celui du prix de l'électricité pour produire de l'hydrogène et quand la durée de fonctionnement des électrolyseurs augmente. Cette diminution du coût des biocarburants ou biocombustibles s'accompagne avantageusement d'une augmentation des rendements matières.

L'invention permet d'envisager des coûts de production de biocombustible biocarburant moins élevés que ceux obtenus avec la filière « Power-to-gas » ou « Power to Liquid », principalement, en raison de la taille de l'électrolyseur envisagé dans une installation selon l'invention qui sera bien moindre qu'un électrolyseur pour la même production méthane par « Power to Gas » du fait de l'alimentation en biomasse qui permet d'assurer une production d'hydrogène par gazéification.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique du principe d'une installation de conversion thermochimique de charge matière carbonée mettant en œuvre en continu le procédé de gazéification selon l'invention;
- la figure 2 est une vue schématique du principe d'une installation de conversion thermochimique d'une biomasse ligno-cellulosique mettant en œuvre en continu le procédé de gazéification selon l'invention dans un réacteur de type à lit fluidisé circulant et une synthèse Fischer-Tropsch pour la production de carburant liquide (BtL).

Dans la description qui va suivre les termes « entrée », « sortie » « amont », « aval », sont utilisés par référence avec la direction de transfert de la biomasse et de circulation du gaz de synthèse dans l'installation de conversion mettant en œuvre le procédé selon l'invention.

Telle qu'illustrée en figure 2, l'installation 2 en continu met en œuvre le procédé d'une gazéification de la biomasse selon l'invention pour la synthèse d'un carburant de synthèse. Ainsi, un réacteur de gazéification 1, de type à lit fluidisé circulant (FICFB, acronyme anglais pour « *Fast Internal Circulating Fluidised Bed* ») est alimenté en continu par de la biomasse ligno-cellulosique depuis un réservoir de stockage approprié 2. L'alimentation en continu peut par exemple être réalisée au moyen d'au moins une vis sans fin, avantageusement comme décrit dans la demande de brevet WO 2005/092749.

Le réacteur 1 à lit fluidisé peut fonctionner de préférence entre 750 et 1500°C, à des pressions entre 1 et 50 bars. De préférence, la température peut être comprise entre 750 et 950°C pour une pression préférentielle entre 1 et 3 bars. Dans l'exemple illustré en la figure 2, la température envisagée est de 850 °C et la pression de 1,5 bar.

Le réacteur 1 peut également être un réacteur de type à flux entraîné (EFR, acronyme anglais de « *Entrained flow reactor* ») fonctionnant de préférence à des températures comprises typiquement entre 1400-1600°C et une pression comprise entre 30 et 50 bars.

A la sortie du réacteur de gazéification, un mélange brut de gaz de synthèse comprenant pour les espèces majoritaires du CO, CO₂, H₂O et H₂ est émis. Après, le gaz subit un refroidissement et une épuration des polluants et autres goudrons au travers d'une unité adaptée 20. Le refroidissement peut avoir lieu typiquement à des températures de l'ordre de 150°C, l'eau est condensée, par exemple par un condenseur. L'eau utilisée pour le refroidissement (boucle froide du condenseur) provient d'un circuit de fluides distinct.

L'élimination des goudrons dans le cas des réacteurs à lit fluidisé peut se faire dans une tour de lavage avec un solvant, le mélange brut de gaz de synthèse peut alors être envoyé dans un compresseur pour être compressé, typiquement à 30-40 bars.

Conformément à l'invention, en aval de l'unité d'épuration 20, on prévoit dans l'installation, un réacteur 30, adapté pour mettre en œuvre la réaction de gaz à l'eau WGS, et un réacteur 50, en parallèle fluidique du réacteur WGS, et adapté pour mettre en œuvre la réaction inverse de gaz à l'eau RWGS.

L'installation comprend en outre une unité d'électrolyse de l'eau 40 adaptée pour mettre en œuvre l'électrolyse de l'eau.

L'unité d'électrolyse 40 est reliée directement respectivement en amont du réacteur de synthèse 70, par exemple sur la ligne d'alimentation 14 du gaz vers une unité de décarbonatation 60 et au réacteur RWGS 50. Cela permet de pouvoir alimenter alternativement l'un 50 ou l'autre 70 des réacteurs en hydrogène produit par l'électrolyse.

En aval des réacteurs WGS 30 et RWGS 50, l'installation 1 comprend une unité de décarbonatation 60. Le mélange de gaz de synthèse subit une décarbonatation dans cette unité 60 adaptée afin d'extraire le CO₂. De préférence, le CO₂ est retiré du mélange gazeux selon un procédé d'absorption sur amine mis en œuvre dans l'unité 60. On précise ici que le procédé d'absorption sur amine aussi appelé lavage aux amines est déjà largement éprouvé à l'échelle industrielle et qu'il consiste à réaliser un captage du CO₂ dans une tour 80 avec des aminés, en tant que solvant, typiquement vers 30-40°C. Un tel procédé permet avantageusement de capter environ 0,5 kg CO₂ par kg d'amine. Selon l'invention, le CO₂ capté est relâché par chauffage, typiquement à 120-130°C, est peut être recyclé vers le réacteur de gazéification 10, comme symbolisé en pointillés sur la figure 2.

Le gaz de synthèse nettoyé est alors envoyé vers le réacteur 70 mettant en œuvre le procédé de synthèse Fischer-Tropsch.

Selon l'invention, on réalise en fonction du prix décroissant de l'électricité, les étapes suivantes :
a/ on fait subir au gaz de synthèse issu de l'unité d'épuration 20, une étape de réaction du gaz à l'eau (WGS) dans le réacteur 30 ;
b/ en aval de l'étape de décarbonatation, on ajoute de l'hydrogène produit par l'électrolyseur 40 dans le gaz de synthèse,
c/ entre l'étape d'épuration du gaz et l'étape de décarbonatation, on fait subir à un mélange de gaz de synthèse et d'hydrogène produit par l'électrolyseur 40, une étape de réaction du gaz à l'eau inverse (RWGS) dans le réacteur 50.

Pour faciliter l'atteinte du ratio H₂/CO souhaité, égal ici à 2 :1, on peut réaliser avantageusement, en sus de l'une ou l'autre des étapes a/ à c/, un reformage dans un reformeur adapté à partir d'une part du gaz de tête issue de la synthèse Fischer-Tropsch et d'autre part d'une partie de l'eau récupérée de celle-ci. A titre de variante, lorsque l'on souhaite réaliser une synthèse pour obtenir un gaz naturel de synthèse, usuellement connu sous l'appellation « SNG » (acronyme anglais de « *Synthetic Natural Gaz* »), le ratio H₂/CO doit être égal à 3, et on ajuste ainsi les débits de vapeur d'eau et de gaz de tête dans le reformeur pour faciliter l'obtention de ce ratio.

Une autre partie de l'eau ou le cas échéant, notamment lorsqu'on ne réalise pas de reformage, toute ou partie de l'eau récupérée en sortie du réacteur 70 de synthèse Fischer-Tropsch peut être recyclée en alimentant le réacteur de gazéification 10.

Finalement, pour obtenir un diesel et un naphta, on réalise un hydrocraquage des produits issus du réacteur 70 de synthèse Fischer-Tropsch, dans un réacteur adapté.

Les teneurs en gaz après chaque étape du procédé global selon l'invention sont indiquées ci-après aux différents points de l'installation, comme référencés sur la figure 2. On précise ici qu'il s'agit de teneurs approximatives qui donnent les ordres de grandeurs.

On précise également que les teneurs en sortie du réacteur de gazéification 10, sont indiquées avec les deux configurations extrêmes de 0% et 100% de recyclage du CO₂. On peut donc envisager une gamme de composition comprise entre ces deux extrêmes.

### Composition du gaz au point 11:

Sans recyclage du CO₂ dans le réacteur de gazéification 10 :
29-31% H₂
14-15% CO₂
16-17% CO
7-8% CH4
30-32% H₂O

Avec un recyclage de 100% de CO₂ comme agent gazéifiant dans le réacteur de gazéification 10 :
19-20% H₂
27-28% CO₂
22-24% CO
8-9% CH4
20-21% H₂O.

### Composition du gaz au point 12:

Sans recyclage du CO₂ dans le réacteur de gazéification 10 :
41,5-43,5% H₂
21-22% CO₂
23-24% CO
10-11% CH4

Avec un recyclage de 100% de CO₂ comme agent gazéifiant dans le réacteur de gazéification 10 :
24-25% H₂
33,5-35,5% CO₂
28-29% CO
10-11% CH4

### Composition du gaz au point 13 (étape a/mise en œuvre):

Sans recyclage du CO₂ dans le réacteur de gazéification 10 :
43-45.% H₂
22.5-23.5% CO₂
21.5-22.5% CO
10-11% CH4

### Composition du gaz au point 14 (étape b/ mise en œuvre):

Sans recyclage du CO₂ dans le réacteur de gazéification 10 :
46-48% H₂
20-21% CO₂
22-23% CO
10-11% CH4

### Composition du gaz au point 15 (étape c/ mise en œuvre):

Avec un recyclage de 100% de CO₂ comme agent gazéifiant dans le réacteur de gazéification 10 :
63-66% H₂
0-2% CO₂
34-36% CO
4,5-5,5% CH4

### Composition du gaz au point 16:

Etape a/ mise en œuvre:
57-59% H₂
27-28% CO
13-14% CH4

Etape b/ mise en œuvre, avec un agent gazéifiant composé à 100% de CO₂ recyclé :
58-60% H₂
28-29% CO
12-13% CH4

Etape c/ mise en œuvre:
63-66% H₂
34-36% CO
4,5-5,5% CH4.

Les inventeurs ont également calculé les rendements matière en produit d'intérêt final à l'aide un logiciel de simulation des procédés. Il peut s'agir du logiciel commercialisé sous la dénomination « Prosim+ » ou du logiciel « Aspen ».

De ces simulations, il ressort très clairement qu'avec l'une ou l'autre des étapes a/ à c/ mises en œuvre les rendements matière sont augmentés comparativement à un procédé selon l'état de l'art et ce en obtenant un ratio H₂/CO précis.

D'autres variantes ou améliorations peuvent être prévues sans pour autant sortir du cadre de l'invention.

Bien que décrite en référence à la biomasse, l'installation selon l'invention de conversion en un carburant liquide par Fischer-Tropsch, peut être utilisée pour la conversion d'autres charges de matière carbonée (charbon, pet coke, déchets organiques...).

L'installation selon l'invention peut aussi comprendre un réacteur de gazéification à flux entrainé.

Enfin, l'invention peut aussi s'appliquer à la synthèse d'un autre produit d'intérêt final, tel que le méthane, le méthanol et le diméthyle éther (DME).

### Références citées

[1]: M. Gassner, F. Maréchal, Thermo-economic process model for thermochemical production of Synthetic Natural Gas (SNG) from lignocellulosic biomass, Biomass and Bioenergy 33 (2009) 1587-1604.
[2]: C.N. Hamelinck, Outlook for Advanced Biofuels, University of Utrecht, 2004;
[3]: M.J.A. Tijmensen, Exploration of the possibilities of FT liquids and power via biomass gasification, Biomass bioenergy, 2002, 23, 129-152;
[4] : A. Chauvel, G. Fournier et C. Rambault, Manuel d'évaluation économique des procédés. Editions TECHNIP, 2001;

## Revendications

1. Installation (1) de conversion thermochimique de charge matière carbonée, comprenant :
- un réacteur de gazéification (10),
- une unité (20) d'épuration de gaz de synthèse brut, en aval du réacteur de gazéification,
- un réacteur de synthèse (70),
- une unité (60) de décarbonatation du gaz de synthèse, en aval de l'unité d'épuration, ou en aval du réacteur de synthèse,
et, entre l'unité d'épuration et l'unité de décarbonatation:
- un premier réacteur (30), dit réacteur WGS, adapté pour mettre en œuvre la réaction de gaz à l'eau,
- un deuxième réacteur (50), dit réacteur RWGS, en parallèle fluidique du réacteur WGS, et adapté pour mettre en œuvre la réaction inverse de gaz à l'eau, l'installation comprenant en outre une unité d'électrolyse de l'eau (40) adaptée pour mettre en œuvre la production d'hydrogène, l'unité d'électrolyse étant reliée directement respectivement en amont du réacteur de synthèse et au réacteur RWGS pour alimenter alternativement l'un ou l'autre en hydrogène produit par l'électrolyse.

2. Procédé de conversion thermochimique mis en œuvre dans une installation selon la revendication 1, d'une charge de matière carbonée en un gaz de synthèse en vue de produire un combustible ou un carburant ou un autre produit d'intérêt, notamment un carburant liquide, ou un autre produit de synthèse, selon lequel on réalise une étape de gazéification de la charge de matière carbonée dans un réacteur (1), puis une étape d'épuration du gaz de synthèse produit par la gazéification, une étape de décarbonatation du gaz épuré et on réalise une étape de synthèse du combustible ou du carburant,
le procédé comprenant en outre une étape intermédiaire à choisir parmi l'une des trois étapes intermédiaires a) à c) suivantes:
a/ en amont de l'étape de décarbonatation, on fait subir au gaz de synthèse, une étape de réaction du gaz à l'eau (WGS),
soit
b/ en aval de l'étape d'épuration du gaz, on ajoute au gaz de synthèse, de l'hydrogène produit par électrolyse de l'eau,
soit
c/ en aval de l'étape d'épuration du gaz, on fait subir à un mélange de gaz de synthèse et d'hydrogène produit par électrolyse de l'eau, une étape de réaction du gaz à l'eau inverse (RWGS),
le choix de l'une ou l'autre des étapes a/ à c/ étant réalisé avant la mise en œuvre de l'étape intermédiaire en fonction du coût de l'électricité nécessaire à la production d'hydrogène par électrolyse de l'eau.

3. Procédé selon la revendication 2, selon lequel lorsqu'on réalise l'étape b/, le dioxyde de carbone (CO₂) récupéré de la décarbonatation est au moins en partie injecté dans le réacteur de gazéification (1) en tant qu'agent gazéifiant.

4. Procédé de conversion selon la revendication 3, la totalité du dioxyde de carbone (CO₂) récupéré de la décarbonatation est injectée dans le réacteur de gazéification (1).

5. Procédé de conversion selon l'une quelconque des revendications 2 à 4, selon lequel l'étape de synthèse consiste en une synthèse selon le procédé Fischer-Tropsch pour produire du gazole liquide.

6. Procédé de conversion selon la revendication 5, selon lequel on réalise une étape de reformage des gaz de tête issus de la synthèse Fischer-Tropsch.

7. Procédé de conversion selon la revendication 6, selon lequel on réinjecte l'hydrogène produit par reformage, dans le gaz de synthèse en amont de la synthèse Fischer-Tropsch.

8. Procédé de conversion selon l'une quelconque des revendications 2 à 7, selon lequel l'étape de synthèse consiste en une synthèse pour produire du gaz naturel synthétique (SNG).

9. Procédé de conversion selon l'une quelconque des revendications2 à 8, selon lequel la réaction de gazéification est réalisée à des températures comprises 700 et 1600°C

10. Procédé de conversion selon l'une quelconque des revendications2 à 9, le réacteur de gazéification est un réacteur de type à lit fluidisé, la réaction de gazéification étant réalisée à des températures comprises entre 800 et 950°C.

11. Procédé de conversion selon l'une quelconque des revendications 2 à 9, selon lequel le réacteur de gazéification est un réacteur de type à flux entrainé, la réaction de gazéification étant réalisée à des températures comprises entre 1400 et 1600°C.

12. Procédé de conversion selon l'une quelconque des revendications2 à 11, selon lequel la charge de matière carbonée est de la biomasse, de préférence ligno-cellulosique.

## Patentansprüche

1. Anlage (1) zur thermochemischen Umwandlung einer Charge eines kohlenstoffhaltigen Materials, umfassend:
- einen Vergasungsreaktor (10),
- eine Reinigungseinheit (20) zur Reinigung von Syntheserohgas stromab des Vergasungsreaktors,
- einen Synthesereaktor (70),
- eine Entkarbonisierungseinheit (60) zur Entkarbonisierung des Synthesegases stromab der Reinigungseinheit oder stromab des Synthesereaktors und, zwischen der Reinigungseinheit und der Entkarbonisierungseinheit:
- einen ersten Reaktor (30), WGS-Reaktor genannt, der geeignet ist, die Wassergasreaktion durchzuführen,
- einen zweiten Reaktor (50), RWGS-Reaktor genannt, der fluidisch parallel zum WGS-Reaktor ist und geeignet ist, die reverse Wassergasreaktion durchzuführen,
wobei die Anlage ferner eine Wasserelektrolyseeinheit (40) umfasst, die geeignet ist, die Wasserstofferzeugung durchzuführen, wobei die Elektrolyseeinheit jeweils direkt stromauf an den Synthesereaktor und an den RWGS-Reaktor angeschlossen ist, um alternierend dem einen oder dem anderen den durch die Elektrolyse erzeugten Wasserstoff zuzuführen.

2. Verfahren zur thermochemischen Umwandlung einer Charge eines kohlenstoffhaltigen Materials in ein Synthesegas, das in einer Anlage nach Anspruch 1 durchgeführt wird, um einen Brennstoff oder einen Kraftstoff oder ein anderes Produkt von Interesse zu erzeugen, insbesondere einen flüssigen Kraftstoff oder ein anderes Syntheseprodukt, bei dem man einen Schritt zur Vergasung der Charge eines kohlenstoffhaltigen Materials in einem Reaktor (1) ausführt, dann einen Schritt zur Reinigung des durch die Vergasung erzeugten Synthesegases, und einen Schritt zur Entkarbonisierung des gereinigten Gases und man einen Schritt zur Synthese des Brennstoffs oder des Kraftstoffs ausführt, wobei das Verfahren ferner einen Zwischenschritt umfasst, der unter einem der drei folgenden Zwischenschritte a) bis c) zu wählen ist:
a/ stromauf des Entkarbonisierungsschritts unterzieht man das Synthesegas einem Schritt zur Wassergasreaktion (WGS),
oder
b/ stromab des Schritts zur Reinigung des Gases fügt man dem Synthesegas Wasserstoff hinzu, der durch Elektrolyse von Wasser erzeugt wird,
oder
c/ stromab des Schritts zur Reinigung des Gases unterzieht man ein Gemisch aus Synthesegas und Wasserstoff, der durch Elektrolyse von Wasser erzeugt wird, einem Schritt der reversen Wassergasreaktion (RWGS),
wobei die Wahl des einen oder anderen der Schritte a/ bis c/ vor der Durchführung des Zwischenschritts in Abhängigkeit von den Kosten der zur Erzeugung von Wasserstoff durch Elektrolyse von Wasser benötigten Elektrizität ausgeführt wird.

3. Verfahren nach Anspruch 2, bei dem, wenn man den Schritt b/ ausführt, das zurückgewonnene Kohlendioxid (CO₂) der Entkarbonisierung zumindest teilweise als Vergasungsmittel in den Vergasungsreaktor (1) eingeleitet wird.

4. Umwandlungsverfahren nach Anspruch 3, bei dem das gesamte zurückgewonnene Kohlendioxid (CO₂) der Entkarbonisierung in den Vergasungsreaktor (1) eingeleitet wird.

5. Umwandlungsverfahren nach einem der Ansprüche 2 bis 4, bei dem der Syntheseschritt in einer Synthese nach dem Fischer-Tropsch-Verfahren besteht, um flüssigen Dieselkraftstoff zu erzeugen.

6. Umwandlungsverfahren nach Anspruch 5, bei dem man einen Schritt der Reformierung der aus der Fischer-Tropsch-Synthese stammenden Kopfgase ausführt.

7. Umwandlungsverfahren nach Anspruch 6, bei dem man den durch Reformierung erzeugten Wasserstoff stromauf der Fischer-Tropsch-Synthese wieder in das Synthesegas einleitet.

8. Umwandlungsverfahren nach einem der Ansprüche 2 bis 7, bei dem der Syntheseschritt in einer Synthese zur Erzeugung von synthetischem Erdgas (SNG) besteht.

9. Umwandlungsverfahren nach einem der Ansprüche 2 bis 8, bei dem die Vergasungsreaktion bei Temperaturen zwischen 700 und 1600 °C ausgeführt wird.

10. Umwandlungsverfahren nach einem der Ansprüche 2 bis 9, bei dem der Vergasungsreaktor ein Wirbelbettreaktor ist, wobei die Vergasungsreaktion bei Temperaturen zwischen 800 und 950 °C ausgeführt wird.

11. Umwandlungsverfahren nach einem der Ansprüche 2 bis 9, bei dem der Vergasungsreaktor ein Flugstromreaktor ist, wobei die Vergasungsreaktion bei Temperaturen zwischen 1400 und 1600 °C ausgeführt wird.

12. Umwandlungsverfahren nach einem der Ansprüche 2 bis 11, bei dem die Charge eines kohlenstoffhaltigen Materials Biomasse, bevorzugt Lignocellulose ist.

## Claims

1. Plant (1) for the thermochemical conversion of carbonaceous feedstock, comprising:
- a gasification reactor (10),
- a unit (20) for the purification of crude syngas, downstream of the gasification reactor,
- a synthesis reactor (70),
- a unit (60) for the decarbonization of the syngas, downstream of the purification unit, or downstream of the synthesis reactor,
and, between the purification unit and the decarbonization unit:
- a first reactor (30), referred to as a WGS reactor, suitable for carrying out the water-gas shift reaction,
- a second reactor (50), referred to as a RWGS reactor, fluidically in parallel with the WGS reactor, and suitable for carrying out the reverse water-gas shift reaction,
the plant further comprising a water electrolysis unit (40) suitable for producing hydrogen, the electrolysis unit being directly connected respectively upstream to the synthesis reactor and to the RWGS reactor in order to alternately supply one or the other with hydrogen produced by electrolysis.

2. Process for thermochemical conversion, carried out in a plant according to Claim 1, of a carbonaceous feedstock into a syngas with a view to producing a fuel or a motor fuel or another product of interest, notably a liquid motor fuel, or another synthetic product, according to which a step of gasification of the carbonaceous feedstock in a reactor (1), then a step of purification of the syngas produced by the gasification, and a step of decarbonization of the purified gas are carried out and a step of synthesis of the fuel or motor fuel is carried out, the process further comprising an intermediate step to be chosen from one of the following three intermediate steps a) to c):
a/ upstream of the decarbonization step, the syngas is subjected to a water-gas shift (WGS) reaction step, or
b/ downstream of the gas purification step, hydrogen produced by electrolysis of water is added to the syngas, or
c/ downstream of the gas purification step, a mixture of syngas and hydrogen produced by electrolysis of water is subjected to a reverse water-gas shift (RWGS) reaction step,
the choice of one or other of the steps a/ to c/ being made before the implementation of the intermediate step as a function of the cost of the electricity needed for the production of hydrogen by electrolysis of water.

3. Process according to Claim 2, according to which, when step b/ is carried out, the carbon dioxide (CO₂) recovered from the decarbonization is at least in part injected into the gasification reactor (1) as gasifying agent.

4. Conversion process according to Claim 3, all of the carbon dioxide (CO₂) recovered from the decarbonization is injected into the gasification reactor (1).

5. Conversion process according to any one of Claims 2 to 4, according to which the synthesis step consists of a synthesis according to the Fischer-Tropsch process to produce liquid diesel fuel.

6. Conversion process according to Claim 5, according to which a step of reforming the overhead gases resulting from the Fischer-Tropsch synthesis is carried out.

7. Conversion process according to Claim 6, according to which the hydrogen produced by reforming is reinjected into the syngas upstream of the Fischer-Tropsch synthesis.

8. Conversion process according to any one of Claims 2 to 7, according to which the synthesis step consists of a synthesis to produce synthetic natural gas (SNG).

9. Conversion process according to any one of Claims 2 to 8, according to which the gasification reaction is carried out at temperatures between 700°C and 1600°C.

10. Conversion process according to any one of Claims 2 to 9, the gasification reactor is a fluidized-bed reactor, the gasification reaction being carried out at temperatures between 800°C and 950°C.

11. Conversion process according to any one of Claims 2 to 9, according to which the gasification reactor is an entrained-flow reactor, the gasification reaction being carried out at temperatures between 1400°C and 1600°C.

12. Conversion process according to any one of Claims 2 to 11, according to which the carbonaceous feedstock is biomass, preferably lignocellulosic biomass.
